# EUROPEAN PATENT SPECIFICATION

(11) **EP 3 877 561 B1**
(45) Date of publication and mention of the grant of the patent: **04.03.2026**
(21) Application number: 19829057.9
(22) Date of filing: 13.12.2019
(51) Int. Cl.: C22C 19/07, B29C 64/153, B33Y 70/00, B22F 3/105, B22F 10/28, C22C 1/04

(54) **CO-ALLOY FOR USE IN ADDITIVE MANUFACTURING**
CO-LEGIERUNG ZUR VERWENDUNG IN DER GENERATIVEN FERTIGUNG
ALLIAGE À BASE DE COBALT UTILISÉ DANS LA FABRICATION GÉNÉRATIVE

(30) Priority: 07.01.2019 EP 19150502
(43) Date of publication of application: 15.09.2021
(73) Proprietor: Siemens Energy Global GmbH & Co. KG, 81739 München (DE)
(72) Inventor: RULE, David, 20537 Hamburg (DE); WITTE, Fabio, . (DE)
(86) International application number: PCT/EP2019/085096
(87) International publication number: WO 2020/143995

(56) References cited:
- EP-A1- 2 022 599
- EP-A1- 3 103 570
- EP-A2- 2 868 426
- WO-A1-97/05297
- US-A- 4 082 548
- US-A1- 2006 134 454
- "SUPERALLOYS, SPECIAL-DUTY MATERIALS", METAL PROGRESS,, vol. 122, no. 1, 1 June 1982 (1982-06-01), pages 66 - 67, XP001263104

## Description

The invention relates to alloy and a method for additive manufacturing.

Selectively laser melted metals form large amounts internal residual stresses during the printing process, this means metals with low ductility or low weldability can be difficult to produce in the selective laser melting process. Cobalt-based alloys are commonly used in the hot section of a gas turbine due to their high melting points, high thermal conductivities and strength at high temperature. High temperature cobalt alloys are primarily strengthened with carbide precipitates which results in low ductility at lower temperatures. This low ductility leads to cracks forming in notched areas in the SLM process.

Only relatively low strength Co-based alloys have been utilized so far in the SLM process.

Those processes using high temperature Cobalt based alloys exhibit instability or inconsistencies in producing crack free parts.

It is therefore aim of the invention to overcome the problems mentioned above.

The problem is solved by alloy according to claim 1 and a method according to claim 2.

In the dependent claims further advantages a listed which can be arbitrarily combined with each other to yield further advantages.

The technical feature which solves the problem of low ductility and cracking of Cobalt based alloys in the SLM process is a change of the chemical composition.

The invention comprises an alloy, especially for additive manufacturing, which comprises (in wt%):, especially consists of:

| | |
|---|---|
| Boron (B) | 0.01% - 0.1% |
| Titanium (Ti) | 0.15% - 0.3% |
| Chromium (Cr) | 22.5% - 24.25% |
| Carbon (C) | 0.55% - 0.6% |
| Nickel (Ni) | 10.0% - 15.0% |
| Tantalum (Ta) | 3.0% - 4.0% |
| especially | 3.5% |
| Iron (Fe) | 1.0% - 4.0% |
| Zirconium (Zr) | 0.05% - 0.6% |
| Tungsten (W) optionally: | 6.5% - 7.5% |
| Aluminum (Al) | 0% - 0.15% |
| Manganese (Mn) | < 0.1% |
| remainder Cobalt | (Co). |

Boron (B) was added to a level between 0.01% - 0.1% to increase stress rupture strength and ductility. The effect of Boron is a strengthening of grain boundaries. Percentages of up to 0,1% are found to significantly increase rupture properties by increasing ductility.

Molybdenum (Mo) was set to a level 'as low as possible'. Molybdenum lowers the stacking fault energy of the material and stabilizes layers and small islands of less ductile HCP phase. The total result of this is lower ductility of the material.

Nickel (Ni) level was set to 10% - 15% to additionally increase the stacking fault energy and increase stability of FCC phase. This would lead to higher ductility. If the stacking fault energy is increased enough in this way, the result would favor lattice recovery vs recrystallization and would lead to increase grain size. For SLM materials, small grain sizes are a barrier for high temperature creep performance.

Silicon (Si) was set to a level `as low as possible'. Silicon has been observed to increase Laves phase formation and loss of ductility or 'embrittlement' in Cobalt based alloys. In Nickel alloys, this element is also often responsible for solidification micro-cracking and loss of ductility in grain boundaries.

Iron (Fe) levels were set to levels between 1% - 4%, this should have similar results to the nickel additions, but may have an even larger effect.

The content of Aluminum (Al) is especially between 0.12% and 0.15%, very especially 0.15%.

The content of Boron (B) is especially between 0.02% and 0.1%, especially between 0.05% and 0.1%.

The Carbon (C) content is especially 0.6%.

The content on Nickel (Ni) is optionally between 12.0% and 15%, especially between 13% to 15%, very especially 14% to 15%.

The content on Iron (Fe) is optionally between 2.0% and 4%, especially between 3% to 4%, very especially 4%.

The content on Zirconium (Zr) is between 0.075% to 0.6%, especially 0.3% to 0.6%, very especially 0.3% to 0.4%.

The Titanium (Ti) content is especially 0.23%.

The Chromium (Cr) content is especially 23,3%.

The Tungsten (W) content is especially 7.0%.

## Claims

1. Alloy, which comprises, in wt%:
| | |
|---|---|
| Boron (B) | 0.01% - 0.1% |
| Titanium (Ti) | 0.15% - 0.3% |
| Chromium (Cr) | 22.5% - 24.25% |
| Carbon (C) | 0.55% - 0.6% |
| Nickel (Ni) | 10.0% - 15.0% |
| Tantalum (Ta) | 3.0% - 4.0% |
| especially | 3.5% |
| Iron (Fe) | 1.0% - 4.0% |
| Zirconium (Zr) | 0.05% - 0.6% |
| Tungsten (W) optionally: | 6.5% - 7.5% |
| Aluminum (Al) | 0% - 0.15% |
| Manganese (Mn) | < 0.1%: |
| remainder Cobalt | (Co). |

2. Additive manufacturing method,
wherein an alloy according to claim 1 is used.

3. Alloy or method according to claim 1 or 2,
wherein the content of Aluminum (Al) is between 0.12% and 0.15%.

4. Alloy or method according to one of both of the claims 1, 2 or 3,
wherein the content of Boron (B) is between 0.02% and 0.1%.

5. Alloy or method according to any of the claims 1, 2, 3 or 4,
wherein the Carbon (C) content is 0.6%.

6. Alloy or method according to any of the claims 1, 2, 3 or 5,
wherein the content of Nickel (Ni) is between 12.0% and 15.0%.

7. Alloy or method according to any of the proceeding claims 1, 2, 3, 5 or 6,
wherein the content of Iron (Fe) is between 2.0% and 4.0%.

8. Alloy or method according to any of the proceeding claims,
wherein the content of Zirconium (Zr) is between 0.075% to 0.6%.

9. Alloy or method according to any of the proceeding claims,
wherein the content of Zirconium (Zr) is between 0.5% to 0.6%.

10. Alloy or method according to any of the proceeding claims 1 to 8,
wherein the content of Zirconium (Zr) is between 0.3% to 0.4%.

11. Alloy or method according to any of the claims 1, 2, 3 or 4,
wherein the Titanium (Ti) content is 0.23%.

12. Alloy or method according to any of the claims 1, 2, 3 or 4,
wherein the Chromium (Cr) content is 23,3%.

13. Alloy or method according to any of the claims 1, 2, 3 or 4,
wherein the Tungsten (W) content is 7.0%.

## Patentansprüche

1. Legierung, die in Gew.-% Folgendes umfasst:
| | |
|---|---|
| Bor (B) | 0,01 % - 0,1 % |
| Titan (Ti) | 0,15 % - 0,3 % |
| Chrom (Cr) | 22,5 % - 24,25 % |
| Kohlenstoff (C) | 0,55 % - 0,6 % |
| Nickel (Ni) | 10,0 % - 15,0 % |
| Tantal (Ta) | 3,0 % - 4,0 % |
| insbesondere | 3,5 % |
| Eisen (Fe) | 1,0 % - 4,0 % |
| Zirkonium (Zr) | 0,05 % - 0,6 % |
| Wolfram (W) optional: | 6,5 % - 7,5 % |
| Aluminium (Al) | 0 % - 0,15 % |
| Mangan (Mn) | < 0,1 %: |
| Rest Cobalt | (Co). |

2. Generatives Fertigungsverfahren,
wobei eine Legierung nach Anspruch 1 verwendet wird.

3. Legierung oder Verfahren nach Anspruch 1 oder 2,
wobei der Gehalt an Aluminium (Al) zwischen 0,12 % und 0,15 % liegt.

4. Legierung oder Verfahren nach einem der beiden Ansprüche 1, 2 oder 3,
wobei der Gehalt an Bor (B) zwischen 0,02 % und 0,1 % liegt.

5. Legierung oder Verfahren nach einem der Ansprüche 1, 2, 3 oder 4,
wobei der Gehalt an Kohlenstoff (C) 0,6 % beträgt.

6. Legierung oder Verfahren nach einem der Ansprüche 1, 2, 3 oder 5,
wobei der Gehalt an Nickel (Ni) zwischen 12,0 % und 15,0 % liegt.

7. Legierung oder Verfahren nach einem der vorhergehenden Ansprüche 1, 2, 3, 5 oder 6,
wobei der Gehalt an Eisen (Fe) zwischen 2,0 % und 4,0 % liegt.

8. Legierung oder Verfahren nach einem der vorhergehenden Ansprüche,
wobei der Gehalt an Zirkonium (Zr) zwischen 0,075 % und 0,6 % liegt.

9. Legierung oder Verfahren nach einem der vorhergehenden Ansprüche,
wobei der Gehalt an Zirkonium (Zr) zwischen 0,5 % und 0,6 % liegt.

10. Legierung oder Verfahren nach einem der vorhergehenden Ansprüche 1 bis 8,
wobei der Gehalt an Zirkonium (Zr) zwischen 0,3 % und 0,4 % liegt.

11. Legierung oder Verfahren nach einem der Ansprüche 1, 2, 3 oder 4,
wobei der Gehalt an Titan 0,23 % beträgt.

12. Legierung oder Verfahren nach einem der Ansprüche 1, 2, 3 oder 4,
wobei der Gehalt an Chrom (Cr) 23,3 % beträgt.

13. Legierung oder Verfahren nach einem der Ansprüche 1, 2, 3 oder 4,
wobei der Gehalt an Wolfram (W) 7,0 % beträgt.

## Revendications

1. Alliage,
qui comprend, en % en poids :
| | |
|---|---|
| Bore (B) | 0, 01% - 0,1 % |
| Titane (Ti) | 0,15 % - 0,3 % |
| Chrome (Cr) | 22,5 % - 24,25 % |
| Carbone (C) | 0,55 % - 0,6 % |
| Nickel (Ni) | 10,0 % - 15,0 % |
| Tantale (Ta) | 3,0 % - 4, 0 % |
| notamment | 3,5 % |
| Fer (Fe) | 1,0 % - 4,0 % |
| Zirconium (Zr) | 0,05% - 0,6% |
| Tungstène (W) éventuellement : | 6,5 % - 7,5 % |
| Aluminium (Al) | 0% - 0,15% |
| Manganèse (Mn) | <0,1% ; |
| reste Cobalt | (Co). |

2. Procédé de fabrication additive,
dans lequel un alliage selon la revendication 1 est utilisé.

3. Alliage ou procédé selon la revendication 1 ou 2,
dans lequel la teneur en aluminium (Al) est comprise entre 0,12 % et 0,15 %.

4. Alliage ou procédé selon l'une des deux revendications 1, 2 ou 3,
dans lequel la teneur en bore (B) est comprise entre 0,02 % et 0,1 %.

5. Alliage ou procédé selon l'une quelconque des revendications 1, 2, 3 ou 4,
dans lequel la teneur en carbone (C) est de 0,6 %.

6. Alliage ou procédé selon l'une quelconque des revendications 1, 2, 3 ou 5,
dans lequel la teneur en Nickel (Ni) est comprise entre 12,0 % et 15,0 %.

7. Alliage ou procédé selon l'une quelconque des revendications précédentes 1, 2, 3, 5 ou 6,
dans lequel la teneur en fer (Fe) est comprise entre 2,0 % et 4,0 %.

8. Alliage ou procédé selon l'une quelconque des revendications précédentes,
dans lequel la teneur en zirconium (Zr) est comprise entre 0,075 % et 0,6 %.

9. Alliage ou procédé selon l'une quelconque des revendications précédentes,
dans lequel la teneur en zirconium (Zr) est comprise entre 0,5 % et 0,6 %.

10. Alliage ou procédé selon l'une quelconque des revendications 1 à 8 précédentes,
dans lequel la teneur en zirconium (Zr) est comprise entre 0,3 % et 0,4 %.

11. Alliage ou procédé selon l'une quelconque des revendications 1, 2, 3 ou 4,
dans lequel la teneur en titane (Ti) est de 0,23 %.

12. Alliage ou procédé selon l'une quelconque des revendications 1, 2, 3 ou 4,
dans lequel la teneur en chrome (Cr) est de 23,3 %.

13. Alliage ou procédé selon l'une quelconque des revendications 1, 2, 3 ou 4,
dans lequel la teneur en tungstène (W) est de 7,0 %.
